(19) Europäisches Patentamt
European Patent Office
Office européen des brevets

(11) EP 0 608 703 B1

(12) **EUROPÄISCHE PATENTSCHRIFT**

(45) Veröffentlichungstag und Bekanntmachung des Hinweises auf die Patenterteilung:
**27.05.1998 Patentblatt 1998/22**

(51) Int. Cl.$^6$: **B01J 20/32**, B01D 15/08

(21) Anmeldenummer: **94100332.9**

(22) Anmeldetag: **12.01.1994**

(54) **Trennmaterial für die Chromatographie**
Separation material for chromatography
Matériau de séparation pour chromatographie

(84) Benannte Vertragsstaaten:
**BE DE FR GB LU NL**

(30) Priorität: **23.01.1993 DE 9300912 U**

(43) Veröffentlichungstag der Anmeldung:
**03.08.1994 Patentblatt 1994/31**

(73) Patentinhaber:
**MACHEREY, NAGEL & CO.**
**D-52355 Düren (DE)**

(72) Erfinder:
- **Riering, Helmut, Dr.**
**D-50933 Köln (DE)**
- **Sieber, Manfred, Dr.**
**D-52385 Nideggen (DE)**

(74) Vertreter:
**Paul, Dieter-Alfred, Dipl.-Ing.**
**Fichtestrasse 18**
**41464 Neuss (DE)**

(56) Entgegenhaltungen:
**EP-A- 0 180 563**
**EP-A- 0 234 129**
**EP-A- 0 373 391**
**WO-A-89/01931**
**US-A- 5 268 442**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 608 703 B1

## Beschreibung

Die vorliegende Erfindung betrifft ein Verfahren zur Herstellung eines Trennmaterials für die Chromatographie, enthaltend ein Cyclodextrin oder ein Cyclodextrinderivat und einen Träger. Desweiteren betrifft die Erfindung ein nach dem Verfahren hergestelltes Trennmaterial.

Solche Trägermaterialien sind bekannt. So offenbart beispielsweise die US-A-4,539,399 ein Trägermaterial, in dem Cyclodextrin mit Kieselgel über einen Silanether verbunden ist. Weitere ähnliche Trennmaterialien sind beispielsweise in der DE-A-40 06 923, in J. Chromatogr., 350 (1985), S. 371 bis S. 380, Anal. Chem. 55 (1983) S. 1852 bis 1857 und 62 (1990) S. 2198 bis 2205 beschrieben.

Bei all diesen Trennmaterialien erfolgt die Anbindung des Cyclodextrins entweder durch direkte Reaktion der Hydroxylgruppen mit reaktiven Endgruppen modifizierter Kieselgele oder nach Aktivierung eines Teils der Hydroxylgruppen durch Umsetzung mit modifiziertem Kieselgel.

Die Trenneigenschaften solcher Trennmaterialien können durch Substitution der Hydroxylgruppen der Cyclodextrine verändert werden. Dies führt jedoch bei den obigen Produkten häufig zu Schwierigkeiten. So muß bei einer Derivatisierung nach Anbindung an den Träger dessen Stabilität im sauren und basischen Bereich berücksichtigt werden. Reinigungsschritte, die durch Nebenprodukte oder unvollständige Umsetzungen erforderlich wären, knnen häufig nicht durchgeführt werden. Die zur Derivatisierung verwendeten Reagentien können auch mit den Endgruppen des Trägers, beispielsweise des modifizierten Kieselgels, reagieren und unerwünschte Wechselwirkungen zwischen Analyt und Phase hervorrufen. Die Derivatisierungen nach einem Aktivierungsschritt der Hydroxylgruppen kann auch durch die Reaktivität der Aktivierungsgruppen, beispielsweise Tosylgruppen, Carbamidsäureester und Aminofunktionen, eingeschränkt werden. Werden die Cyclodextrine vor der Anbindung derivatisiert, so müssen Hydroxylgruppen für die Anbinbung freibleiben. Diese Art der Reaktionsführung erlaubt es daher nicht, die Hydroxylgruppen quantitativ zu derivatisieren.

Aufgabe der Erfindung ist es daher, ein Verfahren zur Herstellung von Trennmaterialien der eingangs genannten Art zu schaffen, das es erlaubt, Cyclodextrine bzw. Cyclodextrinderivate an unterschiedlichen Trägern auf sichere und einfache Weise zu fixieren.

Diese Aufgabe ist erfindungsgemäß dadurch gelöst, daß das Cyclodextrin mit einem Reagens umgesetzt wird, das eine Doppelbindung in das Molekül einführt, der Träger mit Thiolgruppen versehen wird und das Cyclodextrinderivat und der Mercaptogruppen-haltige Träger in Gegenwart eines Radikalkettenstarters miteinander umgesetzt werden.

Das erfindungsgemäße Trennmaterial ist entsprechend dadurch gekennzeichnet, daß die Zwischengruppe, welche das Cyclodextrin bzw. Cyclodextrinderivat und den Träger verbindet, eine Thioethergruppe enthält, und sich zwischen Schwefelatom und Cyclodextringruppe ein Alkyl- oder Aralkyl-Spacer mit 3 bis 20 Atomen befindet.

Es sei darauf hingewiesen, daß die Erfindung nicht darin besteht, eine Thioetherbrücke als radikalische Verknüpfungsmethode zu verwenden - dies ist in der Chemie seit langem bekannt und wird insbesondere in der organischen Synthese auch häufig eingesetzt. Insbesondere ist beispielsweise aus der WO-A-89/0193 ein Verfahren zur nukleophilen Substitution von Fluoratomen in perfluorierten Verbindungen bekannt, wobei insbesondere ein Reaktionsschema zur Verwendung von Perfluorverbindungen und Cyclodextrin über ein Thioetherbrücke offenbart ist. Bei den bekannten Verfahren erfolgt allerdings die Reaktionssequenz zur Substitution des Cyclodextrinsauerstoffs in der Position 6 durch ein Schwefelatom, während im Gegensatz dazu sich erfindungsgemäß zwischen Schwefelatom und Cyclodextrin ein Spacer befindet.

Auch hinsichtlich der Anwendung auf underivatisierte Cyclodextrine hat das erfindungsgemäße Verfahren erhebliche Vorteile.

Als Cyclodextrinderivate können $\alpha$-, $\beta$- oder $\gamma$-Cyclodextrine oder deren Alkylierungsprodukte, insbesondere quantitativ bzw. nahezu quantitativ alkylierte, eingesetzt werden. Die Cyclodextrine werden mit dem Spacer umgesetzt, der eine Doppelbindung in das Molekül einführt. Geeignete Verbindungen enthalten eine Doppelbindung und eine reaktive Gruppe zur Anbindung des Spacers an das Cyclodextrin. Beispiele für geeignete reaktive Gruppen sind ungesättigte Carbonsäurechloride, Carbonsäureanhydride, Tosylate, Isocyanate und Halogenide. Bevorzugt sind Alkenylhalogenide mit 3 bis 6 Kohlenstoffatomen. Besonders bevorzugt ist Allylbromid.

Als Alkylierungsprodukte der Cyclodextrine sind solche bevorzugt, die durch Alkylierung nach Einführung des Spacers erhalten werden. Die eingeführten Alkylgruppen haben bevorzugt 1 bis 10 Kohlenstoffatome, insbesondere 1 bis 5 Kohlenstoffatome. Bevorzugt werden dabei Cyclodextrine eingesetzt, in denen alle OH-Gruppen quantitativ bzw. nahezu quantitativ derivatisiert sind.

Als Träger können sowohl anorganische als auch organische, dem Fachmann bekannte Materialien für die Chromatographie verwendet werden, soweit sich ihre Oberflächen mit Thiolgruppen versehen lassen. Dabei wird Kieselgel bevorzugt; es können aber auch Materialien wie Aluminiumoxid, Titandioxid oder Partikel auf Basis von Vinyl- oder Methacrylamidpolymeren verwendet werden.

Gemäß einer Ausführungsform der Erfindung ist vorgesehen, daß ein Kieselgel der Struktur

$$\begin{array}{r} X\phantom{-} \\ |\phantom{-} \\ -R-S-R_1-Si- \\ |\phantom{-} \\ X\phantom{-} \end{array}$$

umgesetzt wird, um eine mit kovalent gebundenen Thiolgruppen versehene Kieselgeloberfläche zu erhalten.

Darin haben R und X die folgende Bedeutung:

- R Alkyl- oder Aralkylspacer mit 1-20 C-Atomen, bevorzugt mit 1 bis 6 C-Atomen;
- X Alkoxy-, Aralkoxy- oder Alkylgruppe mit 1 bis 20 C-Atomen bevorzugt mit 1 bis 3 C-Atomen, wobei mindestens ein X Alkoxy oder Aralkoxy;
- $R_1$ Alkoxy-, Aralkoxy- oder Alkylrest mit 1 bis 20 C-Atomen, bevorzugt 3 bis 6 C-Atomen.

Nach Einführung der Zwischengruppe sind die Kieselgelmatrix KG und der Cyclodextrinrest CD auf folgende Weise miteinander verbunden:

$$\begin{array}{r} X\phantom{-KG} \\ |\phantom{-KG} \\ CD-R-S-R_1-Si-KG \\ |\phantom{-KG} \\ X\phantom{-KG} \end{array}$$

Dabei haben KG, CD, R, $R_1$ und X die oben angegebenen Bedeutungen.

Die erfindungsgemäßen Trennmaterialien weisen insbesondere die folgende allgemeine Formel auf:

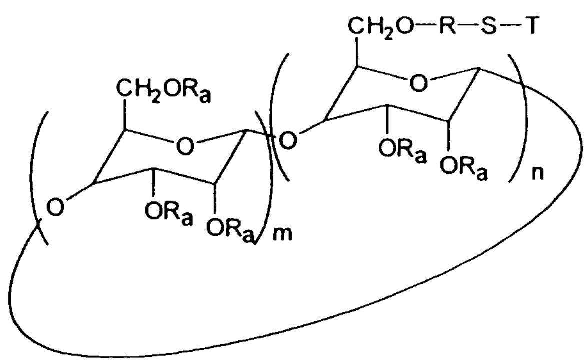

worin bedeuten:

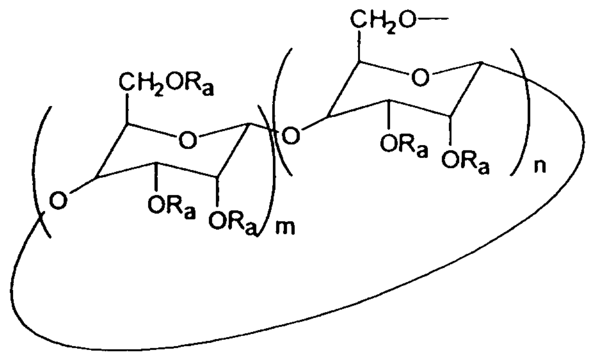

einen α-Cyclodextrinrest (n+m = 6), β-Cyclodextrinrest (n+m = 7) oder γ-Cyclodextrinrest (n+m = 8), oder dessen alkyliertes Derivat,

T einen Träger, wie anorganisches Material oder synthetische organische Polymerträger,

R den Alkyl- oder Aralkylspacer mit 3 bis 20 C-Atomen, bevorzugt mit 3 bis 6 C-Atomen,

$R_a$ ein Wasserstoffatom oder eine Alkylgruppe mit 1 bis 10 C-Atomen, bevorzugt 1 bis 5 C-Atomen.

Als Träger sind folgende Materialien bevorzugt: anorganische Materialien, wie z. B. Kieselgel, Aluminiumoxid, Titandioxid u. a. oder synthetische organische Polymerträger, wie z. B. Polystyrol, Polyacrylamid u. a.

Zur Belegung des Trägers mit Thiolgruppen ist in Abhängigkeit vom Trägergrundmaterial jede dem Fachmann bekannte Reaktionsfolge geeignet, die an dem Träger gebundene Thiolgruppen erzeugt. Als Beispiele seien genannt:

- Reduktion von Sulfonsäuregruppen,
- nucleophile Substitutionen mit Natriumhydrogensulfid und
- reduktive Spaltung von Disulfiden.

Die Belegung des Trägers Kieselgel erfolgt bevorzugt durch Umsetzung mit einem thiolgruppenhaltigen Silan. Als solches Reagens können beispielsweise Silane der Formel

$$HS\text{-}R\text{-}SiX_3$$

worin bedeuten:

R einen Alkyl- oder Aralkylrest mit 1-20 Atomen, bevorzugt mit 1 bis 6 C-Atomen, und

X eine Alkoxy-, Aralkoxy- oder Alkylgruppe mit 1-20 C-Atomen, bevorzugt mit 1 bis 3 Atomen, wobei mindestens ein X Alkoxy oder Aralkoxy ist,

verwendet werden, insbesondere 3-Mercaptopropyltrimethoxysilan, 3-Mercaptopropyltriethoxysilan, Mercaptomethyldimethylethoxysilan oder (Mercaptomethyl)methyldiethoxysilan. Das Kieselgel erhält dadurch an seiner Oberfläche Gruppierungen der allgemeinen Formel:

$$\begin{array}{cccccccccc} & & & & X & & O & \\ & & & & | & & | & \\ H-&S-&R-&Si&-&O-&Si&- \\ & & & & | & & | & \\ & & & & X & & O & \end{array}$$

Überschüssige Silanolgruppen können, falls erforderlich, nach den in der Literatur zahlreich bekannten Methoden nachsilanisiert (endgecappt) werden.

Die erfindungsgemäßen Trennmaterialien lassen sich wie folgt herstellen. Das Cyclodextrin wird mit einem Reagens umgesetzt, das eine Kohlenstoffdoppelbindung in das Molekül einführt. Dazu werden beispielsweise Alkenylhalogenide oder Alkenyltosylate verwendet, die 3 bis 20 Kohlenstoffatome, bevorzugt 3 bis 6 C-Atome, enthalten können. Solche Stoffe sind beispielsweise: Allylbromid oder 4-Brom-1-buten oder 6-Brom-1-hexen. Besonders geeignet ist Allylbromid.

Nach Einführung der Doppelbindung kann die erhaltene Cyclodextrinverbindung auf übliche Weise alkyliert werden, beispielsweise durch Einführung von Alkylgruppen mit 1 bis 10 C-Atomen, bevorzugt mit 1 bis 5 C-Atomen.

Die beiden Reaktionsprodukte, das Cyclodextrin bzw. Cyclodextrinderivat und der mit Thiolgruppen belegte Träger werden dann in Gegenwart eines Radikalkettenstarters, beispielsweise Azoisobutyronitril, miteinander umgesetzt, wobei sich durch Reaktion der Doppelbindung des Cyclodextrins mit der Thiolgruppe am Träger eine Thioetherbrücke ausbildet.

Die erfindungsgemäßen Trennmaterialien eignen sich insbesondere für die Trennung von Racematen, beispielsweise von Thalidomid, Mandelsäure, Hexobarbital, Phenobarbital und Chlorthalidon. Die überraschende Leistungsfähigkeit des Trennmaterials mit dem methylierten Selektor zeigt sich z. B. in der wesentlich verbesserten und schnelleren Auftrennung der Barbiturate Mephobarbital und Hexobarbital im Vergleich zur konventionellen Cyclodextrinphase mit underivatisierten Hydroxylgruppen. Die Trennmaterialien sind in allen Chromatographieverfahren einsetzbar, insbesondere in der Flüssigkeitschromatographie (LC), Dünnschichtchromatographie (DC) und Hochdruckflüssigkeitschromatographie (HPLC).

Die Erfindung wird nachfolgend anhand der Beispiele näher erläutert.

Beispiel 1: Einführung von Thiolgruppen in Kieselgel

100 g Kieselgel (z. B. NUCLEOSIL® 100-5 der Fa. Macherey, Nagel, Düren) wurden über Nacht bei 180°C getrocknet und in 400 ml wasserfreiem Toluol aufgeschlämmt. Man setzte 2 ml Butylamin und 30 ml 3-Mercaptopropyltrimethoxysilan zu und erhitzte 4 Stunden unter Rückfluß. Die Suspension wurde über eine Glasfritte abfiltriert und mit Methylenchlorid, Methanol, Wasser und Methanol gewaschen.

Die C, H, S-Bestimmung des so erhaltenen Kieselgels lieferte folgende Ergebnisse:

4.36 % C, 1.15 % H und 2.56 % S.

Aus dem Schwefelgehalt ergibt sich eine Belegung von 0,8 mmol Schwefel pro Gramm Kieselgel.

Beispiel 2: Einführung eines Spacers in Cyclodextrin

10 g β-Cyclodextrin wurden über Nacht bei 110°C getrocknet und in 100 ml Dimethylformamid suspendiert. Man setzte 0,8 g Natriumhydrid-Dispersion (60-65 % Natriumhydrid) zu und rührte 1 Stunde. Es bildete sich ein Gel. Zu der Reaktionsmischung fügte man 3,6 g Allylbromid und ließ über Nacht rühren. Zur Aufarbeitung wurde die klare Lösung in 500 ml Methylenchlorid eingerührt. Der entstandene weiße Niederschlag wurde abgesaugt und mit Methylenchlorid gewaschen. Das Rohprodukt wurde bei 40°C getrocknet und ohne weitere Reinigung eingesetzt.

Beispiel 3: Herstellung des Trennmaterials

4 g der unter Beispiel 2 hergestellten Verbindung und 10 g des unter Beispiel 1 hergestellten Kieselgels wurden in 100 ml Methanol und 20 ml Wasser suspendiert. Man fügte 100 mg Azoisobutyronitril zu und spülte die Apparatur mit Stickstoff. Anschließend wurde das Reaktionsgemisch über Nacht unter Rückfluß erhitzt. Zur Aufarbeitung wurde die

Suspension über eine Glasfritte abfiltriert und das Kieselgel mit Methanol, Wasser, Methanol und Methylenchlorid gründlich gewaschen. Staubanteile wurden durch Sedimentation entfernt.

Beispiel 4: Herstellung des methylierten Selektors

5 g Natriumhydrid-Dispersion (60-65 % Natriumhydrid) wurden in 50 ml Dimethylsulfoxid suspendiert und bei 50°C 1 Stunde gerührt. Anschließend fügte man 2,5 g des Produktes aus Beispiel 2 zu und rührt bei Raumtemperatur 1 Stunde.

Man ließ 10 ml Methyliodid in 20 ml Dimethylsulfoxid langsam zutropfen. Die Reaktionsmischung wurde über Nacht gerührt. Zur Aufbereitung wurde die klare Lösung in 600 ml Wasser eingerührt. Die wäßrige Phase wurde viermal mit 50 ml Methylenchlorid extrahiert. Die vereinigten, mit Natriumsulfat getrockneten organischen Phasen reinigte man durch Säulenfiltration (POLGOSIL® 63100, Toluol/Ethanol 4:1). Nach dem Einengen im Vakuum blieb ein Öl zurück.

Zur Charakterisierung des permethylierten Selektors wurden ein $^1$H-NMR- und ein IR-Spektrum erstellt. Es lassen sich damit folgende Aussagen treffen:

$^1$-H-NMR-Spektrum:

- Nachweis der olefinischen Protonen (5.15 und 6 ppm)
- Nachweis von 3 unterschiedlichen Methoxyprotonen (O-$CH_3$; 2,3 und 6-Stellung) bei 3.4, 3.5 und 3.7 ppm als Singuletts.
- Die Intensität der Signale der Methoxyprotonen sind vergleichbar, jedoch ist eine Quantifizierung durch Integration durch die Signalüberlagerung mit den Protonen des Cyclodextrins nicht möglich.

IR-Spektrum:

Dieses Spektrum zeigt starke Signale im Bereich um 2900 $cm^{-1}$ (CH-Valenzschwingung) und zwischen 1050 und 1240 $cm^1$ (C-O-C-Valenzschwingungen). Die Absorbtion im Bereich der OH-Gruppen (3400 $cm^{-1}$) ist dagegen extrem schwach ausgeprägt. Sie kann auch durch Wasserspuren hervorgerufen worden sein. Dieses deutet auf eine quantitative bzw. nahezu quantitative Derivatisierung der Hydroxylgruppen hin. Das IR-Spektrum ist in der Figur 1 dargestellt.

Beispiel 5: Herstellung eines Trennmaterials mit methyliertem Selektor

Das unter Beispiel 4 erhaltene Öl und 5 g des unter Beispiel 1 hergestellten Kieselgels wurden in 100 ml Methanol suspendiert. Man fügte 50 mg Azoisobutyronitril zu und spülte die Apparatur mit Stickstoff. Anschließend wurde das Reaktionsgemisch über Nacht unter Rückfluß erhitzt. Zur Aufarbeitung wurde die Suspension über eine Glasfritte abfiltriert und das Kieselgel mit Methanol, Wasser, Methanol und Methylenchlorid gründlich gewaschen. Staubanteile wurden durch Sedimentation entfernt.

Beispiel 6: Trennung von Substanzen

Das nach Beispiel 3 erhaltene Material wurde in eine HPLC-Säule mit der Länge 200 mm und einem Innendurchmesser von 4 mm und das nach Beispiel 5 erhaltene Material in eine HPLC-Säule der Länge 150 mm und einem Innendurchmesser von 4 mm gefüllt und zur Trennung von Racematen eingesetzt. Die Ergebnisse sind in Tabelle 1 aufgeführt.

Tabelle 1

| Substanz | Laufmittel | Phase[a)] | Fluß [ml/min] | RT[2)][min] |
|---|---|---|---|---|
| Hexobarbital | Methanol/50 mM $NaH_2PO_4$ pH 6.0, 45/55 | 1 | 0.7 | 23.8/26.3 |
| Hexobarbital | Methanol/Wasser 50/50 | 2 | 0.7 | 5.0/6.2 |
| Mephobarbital | Methanol/50 mM $NaH_2PO_4$ pH 6.0, 40/60 | 1 | 0.6 | 26.1/28.3 |
| Mephobarbital | Methanol/Wasser 50/50 | 2 | 0.7 | 6.6/9.1 |
| Chlorthalidon | Methanol/Wasser 40/60 | 1 | 0.7 | 12.2/15.8 |
| Thalidomid | Methanol/50 mM $NaH_2PO_4$ pH 6.5, 40/60 | 1 | 0.7 | 9.8/10.5 |
| Ibuprofen | Methanol/0.1 % TEAA pH 4.0, 50/50 | 2 | 0.7 | 30.3/33.3 |
| Ciprofibrat | Methanol/0.1 % TEAA pH 4.0, 50/50 | 2 | 0.7 | 7.0/8.3 |
| Mandelsäure | Methanol/50 mM $NaH_2PO_4$ pH 3.0, 95/5 | 1 | 0.7 | 25.5/27.3 |

[a)] 1: Phase nach Beispiel 3;
2: Phase nach Beispiel 5
[2)] Retentionszeit

**Patentansprüche**

1. Verfahren zur Herstellung eines Trennmaterials für die Chromatographie enthaltend ein Cyclodextrin oder ein Cyclodextriderivat und einen Träger,
dadurch gekennzeichnet, daß das Cyclodextrin mit einem Reagenz umgesetzt wird, das eine Doppelbindung in das Molekül einführt, der Träger mit Thiolgruppen versehen wird und das Cyclodextrinderivat und der mercaptogruppenhaltige Träger in Gegenwart eines Radikalkettenstarters miteinander umgesetzt werden.

2. Verfahren nach Anspruch 1,
dadurch gekennzeichnet, daß das Cyclodextrin mit Alkenyltosylaten oder Alkenylhalogeniden, insbesondere Allylbromid, umgesetzt wird.

3. Verfahren nach Anspruch 1,
dadurch gekennzeichnet, daß ein Kieselgel mit einem Silan der Struktur

$$HS\text{-}R_1\text{ -}SiX_3$$

mit

$R_1$ Alkyl- oder Aralkylrest mit 1 - 2∅ C-Atomen und

X Alkoxy-, Aralkoxy- oder Alkylgruppe mit 1 - 2∅ Atomen, wobei mindestens ein X Aloxy oder Aralkoxy ist,

umgesetzt wird, um eine mit kovalent gebundenen Thiolgruppen versehene Kieselgeloberfläche zu erhalten.

4. Trennmaterial für die Chromatographie, enthaltend ein Cyclodextrin oder Cyclodextrinderivat und einen Träger, welche chemisch über eine Zwischengruppe verbunden sind, dadurch gekennzeichnet, daß die Zwischengruppe eine Thioethergruppe enthält und sich zwischen Schwefelatom und Cyclodextringruppe ein Alkyl- oder Aralkylspacer mit 3 - 2∅ Atomen befindet.

5. Trennmaterial nach Anspruch 4,
gekennzeichnet durch die allgemeine Formel

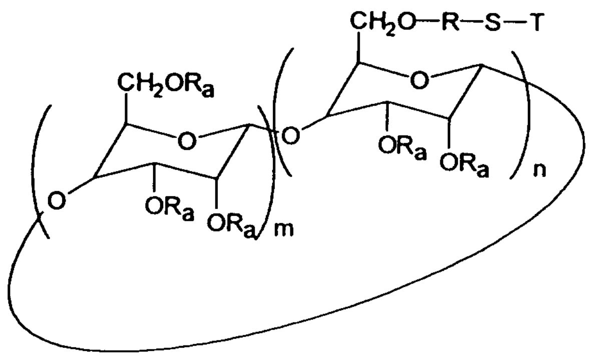

worin bedeuten:

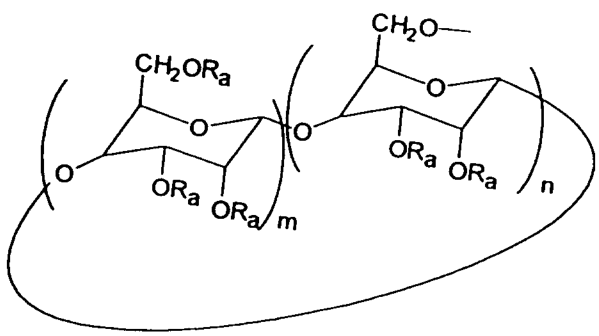

einen α-Cyclodextrinrest (n+m = 6), β-Cyclodextrinrest (n+m = 7) oder γ-Cyclodextrinrest (n+m = 8), oder dessen alkyliertes Derivat,

T einen Träger, wie anorganisches Material oder synthetische organische Polymerträger,

R den Alkyl- oder Aralkylspacer mit 3 - 2Ø C-Atomen, bevorzugt mit 3 bis 6 C-Atomen,

$R_a$ ein Wasserstoffatom oder eine Alkylgruppe mit 1 bis 1Ø C-Atomen, bevorzugt 1 bis 5 C-Atomen.

**6.** Trennmaterial nach Anspruch 5,
dadurch gekennzeichnet, daß -S-T der Rest eines anorganischen Materials (Kieselgel, Aluminiumoxid, Titanoxid u.ä.) oder eines synthetischen organischen Polymerträgers (Polystyrol, Polyacrylamid u.ä.) ist, dessen Oberfläche mit Thiolgruppen belegt ist.

**7.** Trennmaterial nach Anspruch 6,
dadurch gekennzeichnet, daß -S-T ein Kieselgelrest ist, der durch Reaktion mit einem Silan der Struktur

$$HS\text{-}R_1\text{-}SiX_3$$

mit

$R_1$ Alkyl- oder Aralkylrest mit 1 - 2Ø C-Atomen und

X Alkoxy-, Aralkoxy- oder Alkylgruppe mit 1 - 2Ø C-Atomen, wobei mindestens ein X Alkoxy oder Aralkoxy ist,

mit Thiolgruppen belegt wurde.

8. Verwendung der Trennmaterialien nach den Ansprüchen 4 bis 7 zur Trennung von organischen Verbindungen, insbesondere von Racematen.

**Claims**

1. A method of producing a separation material for chromatography, containing a cyclodextrin or a cyclodextrin derivative and a support, characterised in that the cyclodextrin is reacted with a reagent which introduces a double bond into its molecule, the support is provided with thiol groups, and the cyclodextrin derivative and the support which contains mercapto groups are reacted with each other in the presence of a radical chain initiator.

2. A method according to claim 1,
characterised in that the cyclodextrin is reacted with alkenyl tosylates or alkenyl halides, particularly with allyl bromide.

3. A method according to claim 1, characterised in that a silica gel is reacted with a silane of structure

$$H\text{-}R_1\text{-}SiX_3,$$

where

$R_1$ is an alkyl or aralkyl radical comprising 1 - 20 C atoms, and

X is an alkoxy, aralkoxy or alkyl group comprising 1 - 20 C atoms, wherein at least one X is alkoxy or aralkoxy,

in order to obtain a silica gel surface which is provided with covalently bonded thiol groups.

4. A separation material for chromatography, containing a cyclodextrin or cyclodextrin derivative and a support, which are chemically bonded via an intermediate group, characterised in that the intermediate group contains a thioether group and an alkyl or aralkyl spacer comprising 3 - 20 C atoms is situated between the sulphur atom and the cyclodextrin group.

5. A separation material according to claim 4,
characterised by the general formula

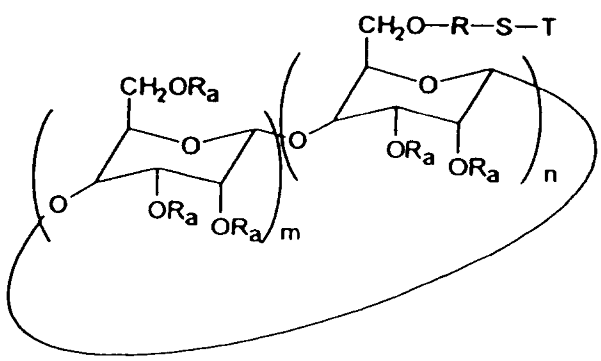

wherein:

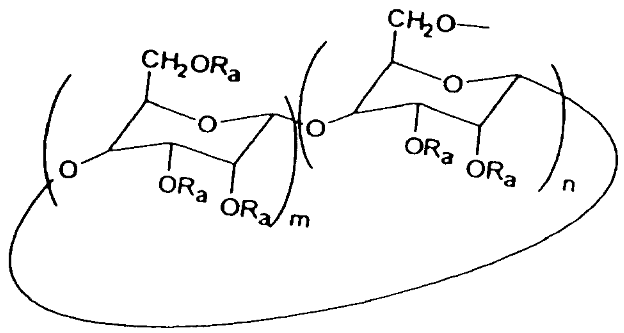

denotes an α-cyclodextrin residue (n+m = 6), a β-cyclodextrin residue (n+m = 7) or a γ-cyclodextrin residue (n+m = 8) or the alkylated derivative thereof,

T denotes a support such as an inorganic material or a synthetic organic polymer support,

R denotes the alkyl or aralkyl spacer comprising 3 - 20 C atoms, preferably comprising 3 - 6 C atoms, and

$R_a$ denotes a hydrogen atom or an alkyl group comprising 1 to 10 C atoms, preferably 1 to 5 C atoms.

**6.** A separation material according to claim 5, characterised in that -S-T is the residue of an inorganic material (silica gel, alumina, titanium oxide, etc.) or of a synthetic organic polymer support (polystyrene, polyacrylamide, etc.), the surface of which is covered by thiol groups.

**7.** A separation material according to claim 6, characterised in that -S-T is a silica gel residue which has been covered by thiol groups by reaction with a silane of structure

$$H\text{-}R_1\text{-}SiX_3,$$

where

$R_1$ is an alkyl or aralkyl radical comprising 1 - 20 C atoms, and

X is an alkoxy, aralkoxy or alkyl group comprising 1 - 20 C atoms, wherein at least one X is alkoxy or aralkoxy.

**8.** The use of a separation material according to claims 4 to 7 for the separation of organic compounds, particularly racemates.

**Revendications**

**1.** Procédé de préparation d'un matériau de séparation (ou matériau séparateur) pour la chromatographie, ce matériau contenant une cyclodextrine ou un dérivé de cyclodextrine et un support, procédé caractérisé en ce que l'on fait réagir la cyclodextrine avec un réactif qui introduit une double liaison dans la molécule, on dote le support de groupes thiols et l'on fait réagir l'un avec l'autre, en présence d'un amorceur de chaînes radicalaires, le dérivé de cyclodextrine et le support contenant des groupes mercapto.

**2.** Procédé selon la revendication 1, caractérisé en ce qu'on fait réagir la cyclodextrine avec des tosylates d'alcényle ou avec des halogénures d'alcényle, notamment avec le bromure d'allyle.

**3.** Procédé selon la revendication 1, caractérisé en ce qu'on fait réagir un gel de silice avec un silane de structure :

$$HS\text{-}R_1\text{-}SiX_3,$$

dans laquelle

$R_1$ représente un reste alkyle ou aralkyle ayant 1 à 20 atomes de carbone et

X représente un groupe alcoxy, aralcoxy ou alkyle ayant 1 à 20 atomes de carbone, au moins un symbole X représentant un groupe alcoxy ou aralcoxy,

pour obtenir une surface de gel de silice dotée de groupes thiols fixés par covalence.

**4.** Matériau séparateur pour la chromatographie, contenant une cyclodextrine ou un dérivé de cyclodextrine et un support, qui sont chimiquement liés à l'aide d'un groupe intermédiaire, matériau caractérisé en ce que le groupe intermédiaire contient un groupe thioéther et qu'il y a entre l'atome de soufre et le groupe cyclodextrine un motif ou groupe alkyle ou aralkyle d'espacement comportant 3 à 20 atomes.

**5.** Matériau séparateur selon la revendication 4 caractérisé par la formule générale :

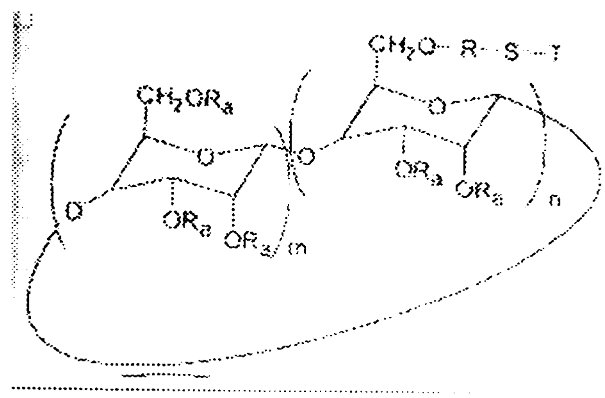

dans laquelle

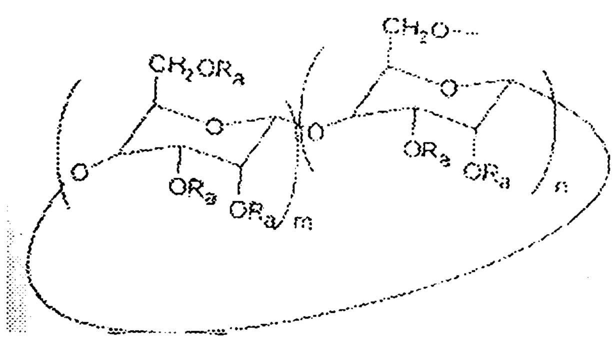

représente un reste $\alpha$-cyclodextrine ( n + m = 6 ), un reste $\beta$-cyclodextrine ( n + m = 7 ) ou un reste $\gamma$ cyclodextrine ( n + m = 8 ), ou son dérivé alkylé,

- T représente un support, comme matériau minéral ou un support polymère organique de synthèse,
- R représente le motif ou groupe alkyle ou aralkyle d'espacement ayant 3 à 20 atomes de carbone, et ayant de préférence 3 à 6 atomes,
- $R_a$ représente un atome d'hydrogène ou un groupe alkyle ayant 1 à 10 atomes de carbone, et ayant de préférence 1 à 5 atomes de carbone.

**6.** Matériau séparateur selon la revendication 5, caractérisé en ce que -S-T représente le reste d'un matériau minéral (gel de silice, oxyde d'aluminium , oxyde de titane, et analogues) ou un support polymère organique de synthèse (polystyrène, polyacrylamide, et analogue), dont la surface est garnie ou dotée de groupes thiols.

**7.** Matériau séparateur selon la revendication 6, caractérisé en ce que -S-T représente un reste de gel de silice qui a été doté de groupes thiols par réaction avec un silane de structure :

$$HS\text{-}R_1 - SiX_3 ,$$

dans laquelle

$R_1$ représente un reste alkyle ou aralkyle ayant 1 à 20 atomes de carbone, et
X représente un groupe alcoxy, aralcoxy ou alkyle ayant 1 à 20 atomes de carbone, au moins un X représentant un groupe alcoxy ou aralcoxy.

**8.** Utilisation des matériaux séparateurs selon les revendications 4 à 7 pour la séparation de composés organiques, notamment de racémates ou de racémiques.

IR-Spektrum des methylierten Cyclodextrinselektors

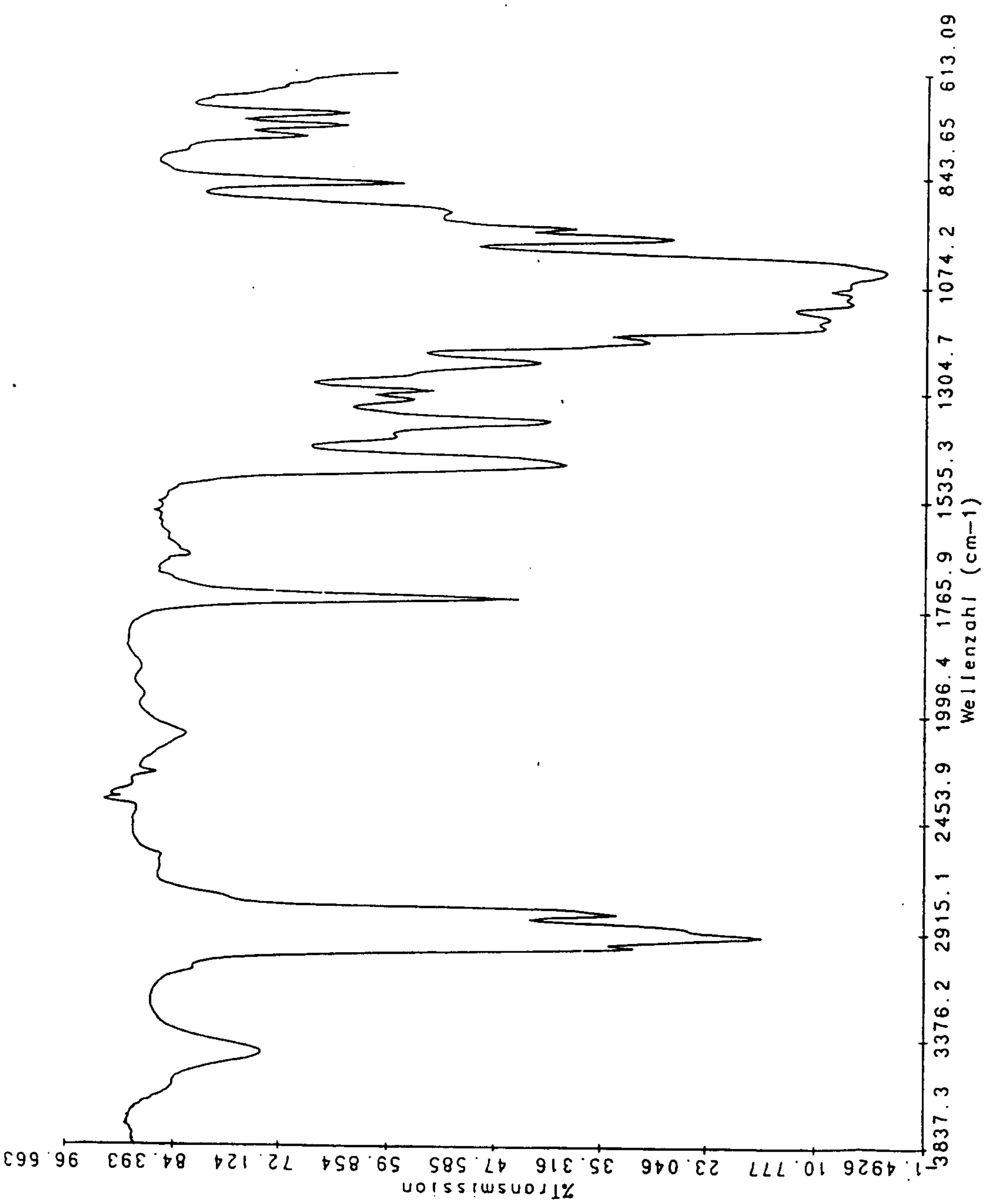


FIG. 1